# EUROPEAN PATENT SPECIFICATION

(11) **EP 3 312 551 B1**
(45) Date of publication and mention of the grant of the patent: **15.05.2019**
(21) Application number: 16020413.7
(22) Date of filing: 24.10.2016
(51) Int. Cl.: G01B 11/06, G01B 11/22, G01W 1/14, G01F 23/292

(54) **A DEPTH GAUGE**
TIEFENMESSGERÄT
JAUGE DE PROFONDEUR

(43) Date of publication of application: 25.04.2018
(73) Proprietor: Gill Corporate Limited, New Milton, Hampshire BH25 6QJ (GB)
(72) Inventor: Blacklock, Oliver Stewart, Lymington, Hampshire SO41 9GT (GB)
(74) Representative: Crouch, David John

(56) References cited:
- WO-A2-2013/114151
- JP-A- H04 252 988
- JP-A- 2000 258 557
- US-A1- 2004 089 067
- US-A1- 2011 219 868

## Description

The present invention relates to a depth gauge comprising an elongate support which is intended to be in an upright orientation when in use, N sets of emitters, where N is an integer greater than 1, each set of emitters being mounted on the elongate support and being spaced apart therealong, and N sets of detectors, each set of detectors being mounted on the elongate support and being spaced apart therealong, the 2N sets being directed in different respective directions and the emitters and the detectors being electrically connected to a processor to enable the latter to send signals to the emitters and receive signals from the detectors.

One such gauge is described and illustrated in US 2011/219868 A1, for measuring the depth of snow.

The present invention seeks to provide a gauge for measuring the depth of snow, especially if the snow may become caked against the emitters and the detectors in the event of driving wind conditions in which the snow is driven against the gauge to settle on the gauge before it has reached the ground.

Accordingly, the present invention is directed to a depth gauge having the construction set out in the opening paragraph of the present specification, in which each emitter and each detector is directed outwardly from the gauge, so that the strength of a signal received by a detector which signal has been issued by an adjacent emitter will be dependent upon the extent to which that signal has been reflected by material which is adjacent to the emitter and the detector, and in which the emitters and the detectors alternate with one another around the elongate support so as to provide 2N sets of emitter-detector pairs directed in 2N directions respectively.

With such a construction, when it is used to provide a measure of the depth of snow, and in the event that the depth indicated by one of the sets is different from the depth indicated by the other set or one of the other sets, this is indicative that the set indicating a greater depth has snow caked on it, so that the depth indicated by that set may be ignored. Thus such a construction provides the advantage that it can distinguish between a false depth indication arising from snow which has caked onto the gauge, and a true depth indication from snow which has built up from ground level.

The emitters and detectors may comprise light emitters and light detectors. Such a construction is especially useful to measure the depth of snow.

The processor may be constructed to enable it to distinguish between more than two different levels of signal received from each detector. This enables the gauge to distinguish between different types of snow, for example to distinguish between crisp snow, slushy snow, and icy snow.

The processor may be programmed to address each emitter in succession, from the intended lower end of the elongate support upwardly to the intended upper end thereof. With such a construction, the level of the detector at which the measured signal is lower than the signal from the immediately preceding detector may be indicative of the depth of the snow on the ground.

The processor may be programmed to store the level of the signal received from a detector, whilst an adjacent emitter is in the off condition or is otherwise in a condition in which it is not transmitting, then to switch the emitter into a condition in which it is transmitting a signal, at which time it compares the level of the signal received from the detector and stores the difference in the level of that signal relative to the level of the signal when the emitter was in the off condition or was otherwise in a condition in which it was not transmitting. This provides the advantage that the difference signal is independent of the ambient light, so that it does not have an effect on the results provided by the processor, the latter thereby giving the same indication irrespective of whether the gauge is operating during daytime or night time, for example.

Alternatively, the processor may be programmed to cause each emitter to transmit a varied signal, for example a pulsed signal, and it may be programmed to measure a correspondingly varied signal from an adjacent detector. This also provides the advantage of obtaining a measurement which is independent of the ambient light, and to give a greater signal to noise performance.

The emitters and the detectors may be in registration with one another. This ensures that a measurement may be obtained from an emitter/detector of one set at a given level which corresponds in level to an emitter/detector of the other set or of any one of the other sets.

A divider may be provided between the emitter and the detector of a given emitter-detector pair. The divider may have a degree of opacity relative to the signal issued by the emitter of the emitter-detector pair.

A divider may be provided between one emitter-detector pair and an adjacent emitter-detector pair. The divider may have a degree of opacity relative to the signal issued by the emitter of the pair or the adjacent pair. This reduces the likelihood of transmission of a signal directly from an emitter to a detector instead of by way of reflection by surrounding material the depth of which is to be measured.

An example of a depth gauge made in accordance with the present invention is illustrated in greater detail in the accompanying drawings, in which:-
Figure 1 is a side elevational view of a depth gauge embodying the present invention;
Figure 2 is a cross-sectional view of the gauge in the plane indicated by the line II-II shown in Figure 1; and
Figures 3 and 4 show different explanatory graphs.

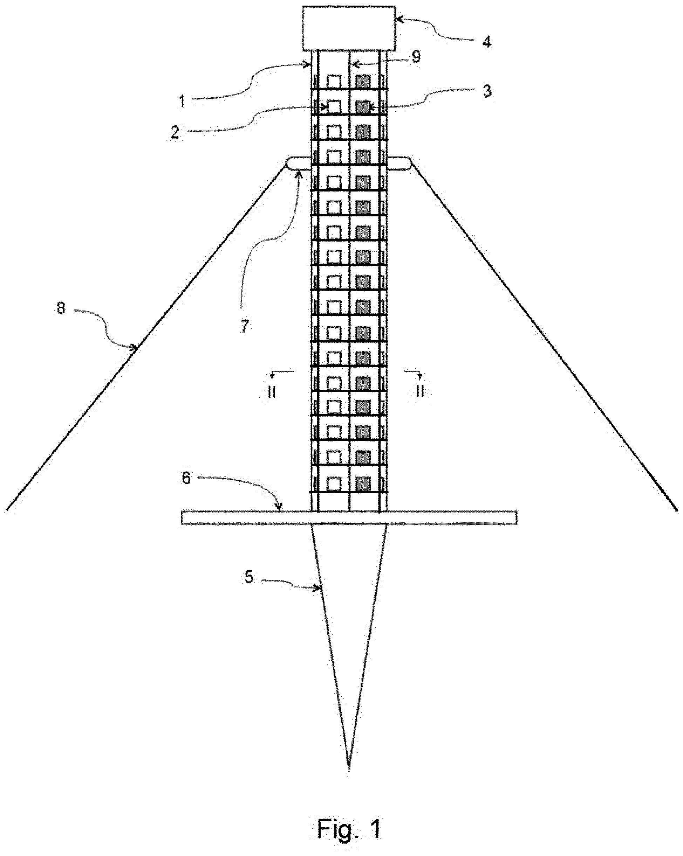

Figure 1 shows a depth gauge comprising an upright rigid post 1 made of a transparent or translucent material, along which are arranged a multiplicity of emitters uniformly spaced apart from one another, and each comprising a light emitting diode 2. A multiplicity of light detectors 3 are also arranged along the rigid post 1 uniformly spaced apart from one another and in registration with the diodes 2. Each emitter 2 and adjacent detector 3 are in close proximity to one another. Each emitter and adjacent detector form an emitter-detector pair. Each such pair is seated on a generally horizontal platform 3a of the post 1, there being also a multiplicity of such support platforms spaced apart along the post 1.

The lower end of the post one is provided with a ground spike 5, with a stability disc or flange 6 sandwiched between the spike 5 and the post 1.

The upper end of the post 1 is provided with a processor with a housing 4. The processor is electrically connected via multiplex circuitry (not shown) to all the emitters 2 and to all of the detectors 3.

The upper half of the post 1 is provided with lugs 7 from which extend guy wires 8, down to ends further from the post 1 which ends are firmly secured to the ground. This provides the post 1 with further stability.

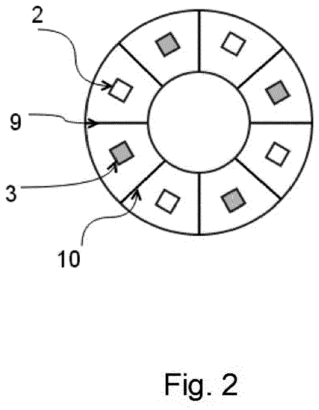

As can be seen more readily from Figure 2, each platform 3a supports four emitters and four detectors, equi-angularly spaced apart around the platform. Thus, on each platform, progressing therearound, emitters alternate with detectors. Each emitter 2 and each detector 3 is directed radially outwardly, in a given horizontal direction, so that each emitter 2 is directed at an angle of substantially 45° to both adjacent detectors 3, and each detector 3 is directed at an angle of substantially 45° to both adjacent emitters 2. Since each emitter 2 has two adjacent detectors 3 on a given level, and each detector 3 has two adjacent emitters 2 on a given level, each emitter 2 and each detector 3 constitutes one part of two emitter-detector pairs. There are dividers 9 and 10 between the emitter 2 and the detector 3 of each emitter-detector pair. These dividers may have a degree of opacity to reduce the extent to which light is transmitted directly from an emitter 2 to a detector 3 of a given emitter-detector pair.

It will be appreciated that the eight emitter-detector pairs of each of the platforms 3a are directed in the same eight respective directions as the emitter-detector pairs of all the other platforms 3a. As a result, there are eight sets of emitter-detector pairs, with respective bisectors constituted by dividers 9 or 10 between the emitters and detectors of each set, such that the eight bisectors are also uniformly spaced apart around the axis of the post 1, with an angle of 45° between adjacent dividers.

When in use, with the spike 5 inserted into the ground so that the flange 6 is pressed against the surface of the ground and the guy wires 8 are also secured to the ground as indicated in Figure 1, the gauge illustrated in Figures 1 and 2 operates in the following manner.

The processor with housing 4 is duly programmed so that it reads the signal issuing from the detector 3 of each of the lowermost eight emitter-detector pairs. It does this whilst the emitters of each of those pairs is switched off, or is otherwise in a non-transmitting condition. It then switches on the emitters 2 of each emitter-detector pair of the lowermost platform 3a, in turn so that there is no interference in the measurements as between one emitter-detector pair and another. It then stores the difference between the reading it obtains from the detector 3 of each emitter-detector pair when the emitter 2 is in a transmitting condition to the reading it obtains from that detector 3 when the emitter 2 of the pair is not transmitting.

This is then repeated for the emitter-detector pairs of each platform 3a in succession upwardly from the bottom of the post 1 towards the top thereof.

The program then analyses these results to indicate at what level of the post 1 the said difference suddenly drops, by virtue of the fact that there is no material to reflect the light from the emitter 2 into the detector 3 of a given emitter-detector pair. It also provides an indication of any difference between the results obtained from the emitter-detector pairs on a given level of platform 3a, indicative for example of whether there is any caking of snow on the post 1, also from the values of the difference signals, as well as an indication of the nature of the material, for example whether it is crisp snow, slushy snow, icy snow, or somewhere between these conditions, or whether it is a fine frost, a coarse frost or block ice with bubbles, for example.

This procedure is completed with the emitters 2 and/or the detectors 3 switched to operate exclusively at a frequency corresponding to a wavelength of substantially 0.6 micrometers. It is then repeated with the emitters 2 and/or the detectors 3 switched to operate exclusively at a wavelength of substantially 1.1 micrometers. The procedure is then repeated with the emitters 2 and/or the detectors switched to operate exclusively at a wavelength of substantially 1.65 micrometers.

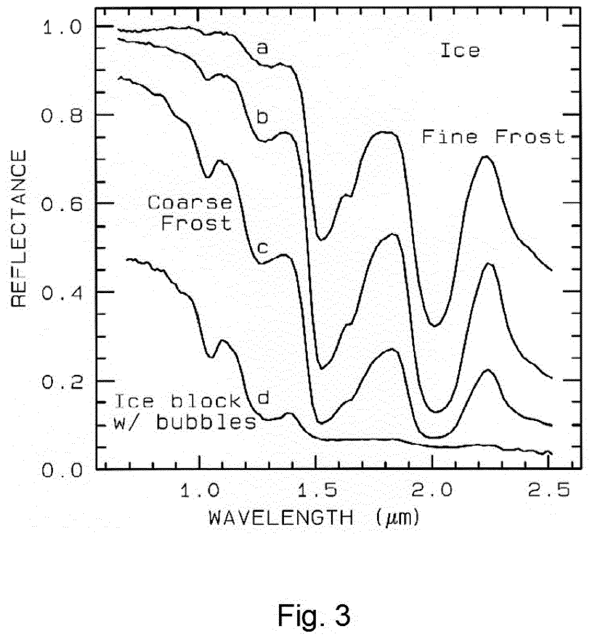

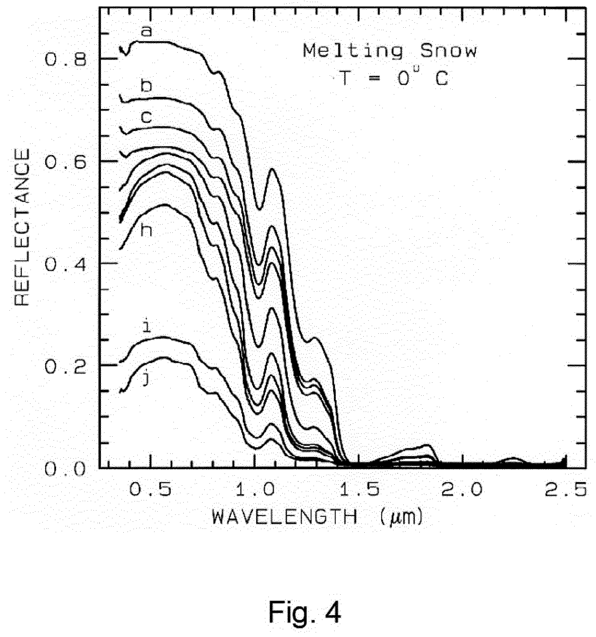

Figure 3 shows a number of curves indicating the reflectance of fine frost, coarse frost and block ice with bubbles respectively as a function of wavelength of the radiation being reflected. Figure 4 shows a number of curves indicating the reflectance of snow at 0°C with different levels of water content respectively, as a function of wavelength of the radiation being reflected. These graphs are from Clark, R. N., Chapter 1: Spectroscopy of Rocks and Minerals, and Principles of Spectroscopy, in Manual of Remote Sensing, Volume 3, Remote Sensing for the Earth Sciences, (A.N. Rencz, ed.) John Wiley and Sons, New York, p 3- 58, 1999.

In regard to Figure 3, that reference states as follows: The near-infrared spectral reflectance of A) a fine grained (∼50 µm) water frost, B) medium grained (∼200 µm) frost, C) coarse grained (400-2000 µm) frost and D) an ice block containing abundant microbubbles. The larger the effective grain size, the greater the mean photon path that photons travel in the ice, and the deeper the absorptions become. Curve D is very low in reflectance because of the large path length in ice. The ice temperatures for these spectra are 112-140 K.

In regard to Figure 4, that reference states as follows: A series of reflectance spectra of melting snow. The top curve (a) is at 0° C and has only a small amount of liquid water, whereas the lowest spectrum (j) is of a puddle of about 3 cm of water on top of the snow. Note in the top spectrum, there is no 1.65-µm band because of the temperature. The 1.65-µm feature is temperature dependent and decreases in strength with increasing temperature (see Clark, 1981a and references therein). Note the increasing absorption at about 0.75 µm and in the short side of the 1-µm ice band, as more liquid water forms. The liquid water becomes spectrally detectable at about spectrum e, when the UV absorption increases.
These graphs show how the different measurements at different frequencies or wavelengths can be used to indicate the nature of the material the depth of which is being measured with the gauge illustrated in Figures 1 and 2, including an indication of the change in the nature of the material at different depths.

All these indications are transmitted from the microprocessor with housing 4 remotely to a data capture centre, via wire or wireless communication, where the various values are recorded and observed so that any remedial activity that needs to take place can be appropriately directed, and so that generally a statistical record can be made.

Many such gauges may form part of a network to cover a wide area. The results from such a network may be published over the internet.

Numerous variations and modifications to the illustrated gauge may readily occur to the reader without taking the resulting construction outside the scope of the present invention, which is defined by the appended claims. For example, there may be only two sets of emitters and two sets of detectors spaced apart along the post 1, or there may be three such sets of each, or more than four, for example eight. Stating this more generally, there may be N sets of emitters 2 and N sets of detectors 3, to have 2N sets of emitter-detector pairs directed in 2N directions respectively, where N>1. Although the emitters and detectors in the illustrated gauge are light emitters and light detectors, they may be constructed to emit and detect a different radiation or a different physical effect. Although the gauge has been described as a device for measuring the depth of snow, the gauge may be adapted to measure the depth of other materials or fluids, especially if they are light reflective. The post 1 may be anything from 50 cm in length to 15 m in length, or indeed outside this range, depending upon the depths of snow to be measured in different parts of the world. The spike 5 may be about 30 cm in length. The processor with
housing 4 may be programmed to detect a malfunctioning of any of the emitters and detectors.

The microprocessor with housing 4 may be programmed so that signals transmitted by each emitter 2 may be varied, for example pulsed, and so that the signals from the corresponding detector 3 that are processed by the microprocessor are those which are correspondingly varied. This avoids the need for measurements to be taken when the emitter is in the off condition, to avoid the effects of ambient light, and to provide a greater signal to noise performance.

## Claims

1. A depth gauge comprising an elongate support (1) which is intended to be in an upright orientation when in use, N sets of emitters (2), where N is an integer greater than 1, each set of emitters being mounted on the elongate support (1) and being spaced apart therealong, and N sets of detectors (3), each set of detectors being mounted on the elongate support (1) and being spaced apart therealong, the 2N sets being directed in different respective directions and the emitters (2) and the detectors (3) being electrically connected to a processor to enable the latter to send signals to the emitters (2) and receive signals from the detectors (3), **characterised in that** each emitter (2) and each detector (3) is directed outwardly from the gauge, so that the strength of a signal received by a detector (3) which signal has been issued by an adjacent emitter (2) will be dependent upon the extent to which that signal has been reflected by material which is adjacent to the emitter (2) and the detector (3), and **in that** the emitters (2) and the detectors (3) alternate with one another around the elongate support (1) so as to provide 2N sets of emitter -detector pairs directed in 2N directions respectively.

2. A depth gauge according to claim 1, **characterised in that** the emitters (2) and detectors (3) comprise light emitters (2) and light detectors (3).

3. A depth gauge according to claim 1 or claim 2, **characterised in that** the processor is constructed to enable it to distinguish between more than two different levels of signal received from each detector (3).

4. A depth gauge according to any preceding claim, **characterised in that** the processor is programmed to address each emitter (2) in succession, from the intended lower end of the elongate support (1) upwardly to the intended upper end thereof.

5. A depth gauge according to any preceding claim, **characterised in that** the processor is programmed to store the level of the signal received from a detector (3), whilst an adjacent emitter (2) is in the off condition or is otherwise in a condition in which it is not transmitting, then to switch the emitter (2) into a condition in which it is transmitting a signal, at which time it compares the level of the signal received from the detector (3) and stores the difference in the level of that signal relative to the level of the signal when the emitter (2) was in the off condition or was otherwise in a condition in which it was not transmitting.

6. A depth gauge according to any one of claims 1 to 4, **characterised in that** the processor is programmed to cause each emitter (2) to transmit a varied signal, for example a pulsed signal, and is programmed to measure a correspondingly varied signal from an adjacent detector (3) .

7. A depth gauge according to any preceding claim, **characterised in that** the emitters (2) and the detectors (3) are in registration with one another.

8. A depth gauge according to any preceding claim, **characterised in that** a divider (9 or 10) is provided between the emitter (2) and the detector (3) of a given emitter-detector pair.

9. A depth gauge according to claim 8, **characterised in that** the divider (9 or 10) has a degree of opacity relative to the signal issued by the emitter (2) of the emitter-detector pair.

10. A depth gauge according to any preceding claim, **characterised in that** a divider (9 or 10) is provided between one emitter-detector pair and an adjacent emitter-detector pair.

11. A depth gauge according to claim 10, **characterised in that** the divider (9 or 10) referred to in claim 11 has a degree of opacity relative to the signal issued by the emitter (2) of the pair or the adjacent pair.

## Patentansprüche

1. Tiefenmessgerät mit einer länglichen Säule (1), die im Gebrauch eine aufrechte Ausrichtung aufweisen soll, N Sätzen von Emittern (2), wobei N eine ganze Zahl größer als 1 ist, wobei jeder Satz von Emittern auf der länglichen Säule (1) montiert und entlang derselben voneinander beabstandet ist, und N Sätzen von Detektoren (3), wobei jeder Satz von Detektoren auf der länglichen Säule (1) montiert und entlang derselben voneinander beabstandet ist, wobei die 2N Sätze in unterschiedliche jeweilige Richtungen gerichtet sind und die Emitter (2) und die Detektoren (3) elektrisch mit einem Prozessor verbunden sind, damit dieser Signale an die Emitter (2) senden und Signale von den Detektoren (3) empfangen kann, **dadurch gekennzeichnet, dass** jeder Emitter (2) und jeder Detektor (3) vom Messgerät nach außen gerichtet ist, so dass die Stärke eines von einem Detektor (3) empfangenen Signals, das von einem angrenzenden Emitter (2) ausgegeben wurde, davon abhängt, in welchem Ausmaß dieses Signal von einem Material reflektiert wurde, das an den Emitter (2) und den Detektor (3) angrenzt, **und dass** die Emitter (2) und die Detektoren (3) um die längliche Säule (1) herum wechselweise so angeordnet sind, dass sie 2N Sätze von Emitter-Detektorpaaren bilden, die jeweils in 2N Richtungen gerichtet sind.

2. Tiefenmessgerät nach Anspruch 1, **dadurch gekennzeichnet, dass** die Emitter (2) und die Detektoren (3) Lichtemitter (2) und Lichtdetektoren (3) umfassen.

3. Tiefenmessgerät nach Anspruch 1 oder Anspruch 2, **dadurch gekennzeichnet, dass** der Prozessor so ausgebildet ist, dass er mehr als zwei verschiedene Signalpegel unterscheiden kann, die von jedem Detektor (3) empfangen werden.

4. Tiefenmessgerät nach einem der vorstehenden Ansprüche, **dadurch gekennzeichnet, dass** der Prozessor so programmiert ist, dass er jeden Emitter (2) nacheinander vom vorgesehenen unteren Ende der länglichen Säule (1) nach oben bis zum vorgesehenen oberen Ende derselben anspricht.

5. Tiefenmessgerät nach einem der vorstehenden Ansprüche, **dadurch gekennzeichnet, dass** der Prozessor so programmiert ist, dass er den Pegel des von einem Detektor (3) empfangenen Signals speichert, während sich ein angrenzender Emitter (2) im Aus-Zustand oder in einem sonstigen Zustand befindet, in dem er nicht sendet, dann den Emitter (2) in einen Zustand schaltet, in dem er ein Signal sendet, wobei er den Pegel des vom Detektor (3) empfangenen Signals vergleicht und die Differenz des Pegels dieses Signals in Bezug auf den Pegel des Signals speichert, als sich der Emitter (2) im Aus-Zustand oder in einem sonstigen Zustand befand, in dem er nicht sendete.

6. Tiefenmessgerät nach einem der Ansprüche 1 bis 4, **dadurch gekennzeichnet, dass** der Prozessor so programmiert ist, dass er jeden Emitter (2) veranlasst, ein verändertes Signal, zum Beispiel ein gepulstes Signal, zu senden, und so programmiert ist, dass er ein entsprechend verändertes Signal von einem angrenzenden Detektor (3) misst.

7. Tiefenmessgerät nach einem der vorstehenden Ansprüche, **dadurch gekennzeichnet, dass** sich die Emitter (2) und die Detektoren (3) in Ausrichtung zueinander befinden.

8. Tiefenmessgerät nach einem der vorstehenden Ansprüche, **dadurch gekennzeichnet, dass** eine Trennwand (9 oder 10) zwischen dem Emitter (2) und dem Detektor (3) eines gegebenen Emitter-Detektorpaares vorgesehen ist.

9. Tiefenmessgerät nach Anspruch 8, **dadurch gekennzeichnet, dass** die Trennwand (9 oder 10) einen gewissen Grad an Opazität in Bezug auf das vom Emitter (2) des Emitter-Detektorpaares ausgegebene Signal aufweist.

10. Tiefenmessgerät nach einem der vorstehenden Ansprüche, **dadurch gekennzeichnet, dass** eine Trennwand (9 oder 10) zwischen einem Emitter-Detektorpaar und einem angrenzenden Emitter-Detektorpaar vorgesehen ist.

11. Tiefenmessgerät nach Anspruch 10, **dadurch gekennzeichnet, dass** die Trennwand (9 oder 10) gemäß Anspruch 10 einen gewissen Grad an Opazität in Bezug auf das vom Emitter (2) des Paares oder des angrenzenden Paares ausgegebene Signal aufweist.

## Revendications

1. Jauge de profondeur comprenant un support allongé (1) qui est destiné à être dans une orientation verticale lors de son utilisation, N ensembles d'émetteurs (2), où N est un entier supérieur à 1, chaque ensemble d'émetteurs étant monté sur le support allongé (1) et étant espacé le long de celui-ci, et N ensembles de détecteurs (3), chaque ensemble de détecteurs étant monté sur le support allongé (1) et étant espacé le long de celui-ci, les 2N ensembles étant dirigés dans différentes directions respectives et les émetteurs (2) et les détecteurs (3) étant électriquement connectés à un processeur pour permettre à ce dernier d'envoyer des signaux aux émetteurs (2) et de recevoir des signaux provenant des détecteurs (3), **caractérisée en ce que** chaque émetteur (2) et chaque détecteur (3) est dirigé vers l'extérieur par rapport à la jauge, de telle sorte que la force d'un signal reçu par un détecteur (3), lequel signal ayant été émis par un émetteur (2) adjacent, dépendra de la mesure dans laquelle ce signal a été réfléchi par un matériau qui est adjacent à l'émetteur (2) et au détecteur (3), et **en ce que** les émetteurs (2) et les détecteurs (3) alternent les uns avec les autres autour du support allongé (1) de manière à fournir 2N ensembles de paires émetteur-détecteur dirigés dans 2N directions respectivement.

2. Jauge de profondeur selon la revendication 1, **caractérisée en ce que** les émetteurs (2) et détecteurs (3) comprennent des émetteurs de lumière (2) et des détecteurs de lumière (3).

3. Jauge de profondeur selon la revendication 1 ou la revendication 2, **caractérisée en ce que** le processeur est construit pour lui permettre de faire la distinction entre plus de deux niveaux différents de signal reçu en provenance de chaque détecteur (3).

4. Jauge de profondeur selon l'une quelconque des revendications précédentes, **caractérisée en ce que** le processeur est programmé pour communiquer avec chaque émetteur (2) de manière successive, à partir de l'extrémité inférieure prévue du support allongé (1) vers le haut jusqu'à l'extrémité supérieure prévue de celui-ci.

5. Jauge de profondeur selon l'une quelconque des revendications précédentes, **caractérisée en ce que** le processeur est programmé pour stocker le niveau du signal reçu en provenance d'un détecteur (3), alors qu'un émetteur (2) adjacent est dans l'état off ou est autrement dans un état dans lequel il ne transmet pas, puis pour commuter l'émetteur (2) dans un état dans lequel il transmet un signal, moment auquel il compare le niveau du signal reçu en provenance du détecteur (3) et stocke la différence du niveau de ce signal par rapport au niveau du signal quand l'émetteur (2) était dans l'état off ou était autrement dans un état dans lequel il ne transmettait pas.

6. Jauge de profondeur selon l'une quelconque des revendications 1 à 4, **caractérisée en ce que** le processeur est programmé pour amener chaque émetteur (2) à transmettre un signal varié, par exemple un signal pulsé, et est programmé pour mesurer un signal varié de manière correspondance provenant d'un détecteur (2) adjacent.

7. Jauge de profondeur selon l'une quelconque des revendications précédentes, **caractérisée en ce que** les émetteurs (2) et les détecteurs (3) sont alignés les uns aux autres.

8. Jauge de profondeur selon l'une quelconque des revendications précédentes, **caractérisée en ce qu'un** séparateur (9 ou 10) est disposé entre l'émetteur (2) et le détecteur (3) d'une paire émetteur-détecteur donnée.

9. Jauge de profondeur selon la revendication 8, **caractérisée en ce que** le séparateur (9 ou 10) a un degré d'opacité par rapport au signal émis par l'émetteur (2) de la paire émetteur-détecteur.

10. Jauge de profondeur selon l'une quelconque des revendications précédentes, **caractérisée en ce qu'**un séparateur (9 ou 10) est disposé entre une paire émetteur-détecteur et une paire émetteur-détecteur adjacente.

11. Jauge de profondeur selon la revendication 10, **caractérisée en ce que** le séparateur (9 ou 10) mentionné dans la revendication 11 a un degré d'opacité par rapport au signal émis par l'émetteur (2) de la paire ou de la paire adjacente.
